# EUROPÄISCHE PATENTSCHRIFT

(11) **EP 2 893 370 B1**
(45) Veröffentlichungstag und Bekanntmachung des Hinweises auf die Patenterteilung: **10.04.2019**
(21) Anmeldenummer: 13750315.7
(22) Anmeldetag: 14.08.2013
(51) Int. Cl.: B60R 19/03, G01S 13/93, B60R 19/48

(54) **ANORDNUNG MIT EINEM VERKLEIDUNGSTEIL UND EINEM RADARSENSOR, KRAFTFAHRZEUG UND VERFAHREN ZUM HERSTELLEN EINER ANORDNUNG**
ASSEMBLY COMPRISING A BODYWORK PART AND A RADAR SENSOR, MOTOR VEHICLE AND METHOD FOR PRODUCING AN ASSEMBLY
AGENCEMENT COMPRENANT UNE PIÈCE D'HABILLAGE ET UN CAPTEUR RADAR, VÉHICULE AUTOMOBILE ET PROCÉDÉ DE FABRICATION D'UN TEL AGENCEMENT

(30) Priorität: 07.09.2012 DE 102012017669
(43) Veröffentlichungstag der Anmeldung: 15.07.2015
(73) Patentinhaber: Valeo Schalter und Sensoren GmbH, 74321 Bietigheim-Bissingen (DE)
(72) Erfinder: SCHAAF, Michael, 85084 Reichertshofen (DE)
(86) Internationale Anmeldenummer: PCT/EP2013/066957
(87) Internationale Veröffentlichungsnummer: WO 2014/037194

(56) Entgegenhaltungen:
- EP-A1- 1 471 598
- DE-A1- 19 830 811
- DE-A1-102004 033 760

## Beschreibung

Die Erfindung betrifft eine Anordnung für ein Kraftfahrzeug, gemäß Anspruch 1. Die Erfindung betrifft außerdem ein Kraftfahrzeug mit einer derartigen Anordnung sowie ein Verfahren zum Herstellen einer solchen Anordnung.

Radarsensoren für Kraftfahrzeuge sind bereits Stand der Technik. Vorliegend gilt das Interesse vorzugsweise einem Radarsensor, welcher bei einer Frequenz von ca. 24 GHz betrieben wird. Die Erfindung ist jedoch nicht auf eine solche Betriebsfrequenz beschränkt. Radarsensoren dienen im Allgemeinen zur Detektion von Zielobjekten und unterstützen den Fahrer beim Führen des Kraftfahrzeugs in vielfältiger Hinsicht. Radarsensoren messen den Abstand zwischen dem Zielobjekt und dem Fahrzeug. Sie messen sowohl die Relativgeschwindigkeit zum Zielobjekt als auch den Zielwinkel, d.h. den Winkel zwischen einer gedachten Verbindungslinie zum Zielobjekt und einer Referenzlinie, etwa der Fahrzeuglängsachse.

Radarsensoren werden üblicherweise hinter dem Stoßfänger platziert, beispielsweise in den jeweiligen Eckbereichen des Stoßfängers. Zur Detektion des Zielobjektes sendet der Radarsensor elektromagnetische Wellen aus, die dann an dem zu detektierenden Zielobjekt reflektieren und als Radarechos empfangen werden. Die Ausbreitung der Wellen erfolgt dabei durch das Material des Stoßfängers hindurch. Die empfangenen Echos werden dann im Hinblick auf die oben genannten Messgrößen ausgewertet.

Mit einem Radarsensor wird in horizontaler Richtung üblicherweise ein relativ breiter azimutaler Winkelbereich abgetastet, welcher sogar 150° betragen kann. Der Radarsensor weist also einen relativ großen azimutalen Erfassungswinkel auf, so dass das Sichtfeld bzw. der Erfassungsbereich des Radarsensors in Azimutrichtung entsprechend breit ist. Der azimutale Erfassungswinkel ist in der Regel bezüglich einer senkrecht zur vorderen Sensorfläche verlaufenden Radarachse symmetrisch, so dass der azimutale Erfassungswinkel von beispielsweise -75° bis +75° bezüglich der Radarachse bemessen wird. Der azimutale Erfassungsbereich kann in kleinere Teilbereiche unterteilt sein, welche einer nach dem anderen durch den Radarsensor beleuchtet werden. Zu diesem Zweck kann beispielsweise die Hauptkeule der Sendeantenne elektronisch in Azimutrichtung verschwenkt werden, beispielsweise nach dem Phase-Array-Prinzip. Die Empfangsantenne kann in diesem Falle in Azimutrichtung eine Empfangscharakteristik aufweisen, mit welcher der gesamte azimutale Erfassungsbereich abgedeckt wird. Andere Ausgestaltungen können alternativ schmale Empfangswinkelbereiche in Verbindung mit breiten Sendekeulen realisieren.

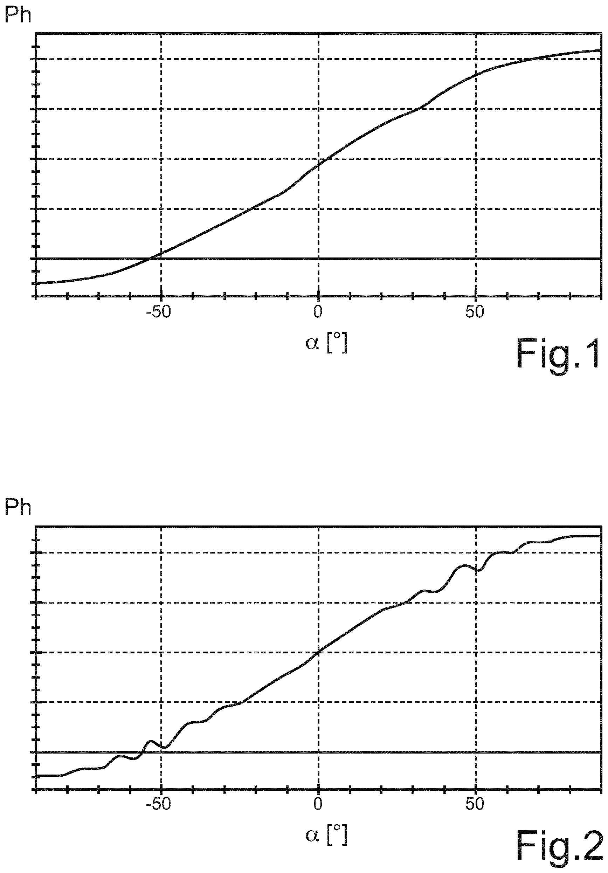

Um den oben genannten Zielwinkel messen zu können, wird eine Anordnung aus mindestens zwei Antennen eingesetzt, welche jeweils durch einzelne Antennenelemente oder aber durch Antennen-Arrays gebildet sein können. Die am Zielobjekt reflektierten Wellen werden durch die beiden Empfangsantennen zu unterschiedlichen Zeitpunkten empfangen, so dass das Empfangssignal der ersten Antenne eine Phasenverschiebung bezüglich des Empfangssignals der zweiten Antenne aufweist. Abhängig von dieser Phasendifferenz zwischen der Phase des ersten Empfangssignals und der Phase des zweiten Empfangssignals kann der Zielwinkel bestimmt werden. Zu diesem Zweck wird eine Phasencharakteristik bzw. Phasenkurve verwendet, welche die Abhängigkeit des Zielwinkels von der Phasendifferenz definiert. Eine solche beispielhafte Phasenkurve ist in Fig. 1 dargestellt. Auf der x-Achse ist dabei der Zielwinkel α aufgetragen, während auf der y-Achse die Phasendifferenz Ph aufgetragen ist. Die in Fig. 1 dargestellte Phasencharakteristik stellt eine Phasenkurve dar, die sich bei einem nicht eingebauten Radarsensor ergibt, dessen Gehäuse gegen rückwärtige Störstrahlung standardmäßig abgeschirmt ist.

Wird nun der Radarsensor in ein Kraftfahrzeug eingebaut, so beeinflusst zusätzlich noch der Stoßfänger die Ausbreitung der elektromagnetischen Wellen, und zwar sowohl der ausgesendeten Wellen als auch der am Zielobjekt reflektierten und auf den Radarsensor einfallenden Wellen. Bei einem eingebauten Radarsensor ist außerdem problematisch, dass gesendete und empfangene elektromagnetische Wellen an metallischen und dielektrischen Gegenständen reflektiert werden. Hierbei sind besonders Strukturen im Bereich hinter dem Radarsensor und somit im Bereich des Fahrgestells problematisch. Durch Reflektionen an metallischen Strukturen des Kraftfahrzeugs kommt es zu Störungen des Radarsensors, und die Messwerte können verfälscht werden. Bei einem eingebauten Radarsensor ergibt sich für die Phasencharakteristik ein ganz anderes Bild als das gemäß Fig. 1. Diese Phasenkurve, welche sich für einen eingebauten Sensor ergibt, ist beispielhaft in Fig. 2 dargestellt. Es kommt zur Bildung von Rippeln auf der Phasenkurve, welche einerseits in dem azimutalen Winkelbereich von -75° bis -35° und andererseits auch in dem Winkelbereich von +35° bis +75° liegen. Die in Fig. 2 dargestellten Wellen auf der Phasenkurve entstehen insbesondere aufgrund der rückwärtigen Störstrahlung bzw. aufgrund von Störwellen, welche an Fahrzeugteilen reflektieren und als Sekundärstrahlung von außerhalb des azimutalen Erfassungswinkels in den Empfangsbereich des Radarsensors gelangen. Ein Großteil dieser störenden Streustrahlung resultiert aus sogenannten Mehrfachreflektionen der Echos, die aus dem Stoßfängerbereich und aus dem Kofferraumbereich des Fahrzeugs kommen und somit vom rückwärtigen Raum des Radarsensors in den hochempfindlichen Bereich der Empfangsantennenanordnung zurückgelangen. Hierdurch kommt es zu Interferenzen mit den ursprünglichen Echos, die auf direktem Weg von den Zielobjekten in die Empfangsantennen gelangen. Ein anderer Teil der Störwellen resultiert aus Induktionseffekten innerhalb der Empfangsantennenanordnung.

Eine Abhilfe gegen die rückwärtige Störstrahlung schafft hier ein Absorptionsschirm, welcher speziell zum Zweck der Absorption der Sekundärstrahlung entwickelt wurde. Ein solcher eigenständiger Absorptionsschirm kann als ein von dem Sensorgehäuse separates Element ausgeführt werden, welches um das Radom des Radarsensors herum angeordnet ist und das Radom außenumfänglich umgibt bzw. umgreift. Ein solcher plattenförmiger und sich vom Radarsensor seitlich nach außen hin erstreckender Absorptionsschirm schließt dann mit der Frontseite des Radoms bündig ab. Ein derartiger Absorptionsschirm absorbiert zwar die Störwellen und verhindert somit eine Ausbreitung der Störwellen in den Empfangsbereich des Radarsensors, jedoch ist ein solches eigenständiges und eigensteifes Bauteil auch mit gewissen Nachteilen verbunden: Zum einen benötigt ein Absorptionsschirm relativ viel Bauraum, welcher hinter dem Stoßfänger üblicherweise nicht zur Verfügung steht. Zum anderen ist ein derartiges Bauteil im Verhältnis zum Radarsensor teuer. Wegen der Spiegelsymmetrie der Stoßfänger muss der Absorptionsschirm für den linken und den rechten Radarsensor unterschiedlich gestaltet werden, was wiederum zu einem erhöhten fertigungstechnischen und logistischen Aufwand führt. Nicht zuletzt trägt der Absorptionsschirm zum Gesamtgewicht der Einbaukonfiguration bei.

In der DE 198 30 811 A1 ist ein in einem Kraftfahrzeug angebrachtes Radargerät offenbart. Das Radargerät ist an einer rückwärtigen Seite einer Stoßstange angebracht. Ferner ist an der rückwärtigen Seite der Stoßstange ein Funkwellen absorbierendes Beschichtungsmaterial vorgesehen.

In der EP 1 471 598 A1 ist ein Kraftfahrzeugradargerät beschrieben, das auf einer Antennenplatte aufliegende Funkwellenabsorber aufweist. Die D102004033760 offenbart ein Radargerät mit einer funkwellenabsorbierenden Manschette.

Es ist Aufgabe der Erfindung, eine Lösung aufzuzeigen, wie bei einer Anordnung der eingangs genannten Gattung der Einfluss von Störwellen auf die Funktionsweise des Radarsensors im Vergleich zum Stand der Technik ohne viel Aufwand reduziert werden kann.

Diese Aufgabe wird erfindungsgemäß durch eine Anordnung, durch ein Kraftfahrzeug, wie auch durch ein Verfahren mit den Merkmalen gemäß den jeweiligen unabhängigen Patentansprüchen gelöst. Vorteilhafte Ausführungen der Erfindung sind Gegenstand der abhängigen Patentansprüche, der Beschreibung und der Figuren.

Eine erfindungsgemäße Anordnung für ein Kraftfahrzeug umfasst ein Verkleidungsteil, insbesondere einen Stoßfänger, und einen Radarsensor, welcher dazu ausgebildet ist, zur Detektion von Zielobjekten elektromagnetische Wellen durch das Verkleidungsteil hindurch auszusenden und Strahlungsechos von den Zielobjekten zu empfangen. Der Radarsensor hat einen azimutalen Erfassungswinkel, durch welchen ein Sichtfeld des Radarsensors in Azimutrichtung definiert ist, wobei der Radarsensor in einem Abstand zu einer Rückseite des Verkleidungsteils angeordnet ist, so dass das azimutale Sichtfeld des Radarsensors das Verkleidungsteil in einem Schnittbereich schneidet. Zur Absorption von Störwellen außerhalb des azimutalen Erfassungswinkels ist ein Absorptionsmaterial in Azimutrichtung außerhalb des Schnittbereiches auf die Rückseite des Verkleidungsteils aufgebracht, und der Schnittbereich ist frei vom Absorptionsmaterial.

Die Erfindung geht also den Weg, die Rückseite des Verkleidungsteils mit einem Absorptionsmaterial zu versehen, und zwar außerhalb des azimutalen Sichtfelds des Radarsensors. Unter Verzicht auf einen eigenständigen und eigensteifen Absorptionsschirm, wie er im Stand der Technik um das Sensorgehäuse eingesetzt wird, kann somit die rückwärtige Störstrahlung zuverlässig und wirkungsvoll absorbiert werden, ohne dass Bauraum hinter dem Verkleidungsteil beansprucht oder aber das Gesamtgewicht der Anordnung zusätzlich noch erhöht wird. Der oben genannte Absorptionsschirm kann durch eine entsprechende Schicht an der Rückseite des Verkleidungsteils ersetzt werden, indem die Rückseite des Verkleidungsteils mit dem Absorptionsmaterial bzw. mit einer Absorptionsschicht versehen wird, welches bzw. welche beispielsweise im Bereich von 24 GHz eine Totalabsorption der Störwellen bewirkt. Die Erfindung hat diverse Vorteile: Wie bereits ausgeführt kann auf den separaten Absorptionsschirm an dem Sensorgehäuse verzichtet werden. Dies führt dazu, dass hinter dem Verkleidungsteil insgesamt weniger Bauraum für den Radarsensor sowie den Halter und den Stecker benötigt wird. Das Zusatzgewicht des Absorptionsschirms entfällt. Nicht zuletzt können durch Verzicht auf den separaten Absorptionsschirm auch Kosten gespart werden. Dennoch können die von dem rückwärtigen Bereich des Radarsensors einfallenden Störwellen bzw. die Sekundärstrahlung wirkungsvoll durch die entsprechende Absorptionsschicht an der Rückseite des Verkleidungsteils absorbiert werden, so dass insgesamt ein zuverlässiger Betrieb des Radarsensors gewährleistet ist.

Unter einem "Absorptionsmaterial" wird ein Material verstanden, welches die elektromagnetischen Wellen im Bereich der Betriebsfrequenz des Radarsensors vollständig oder annähernd vollständig absorbiert. Das Absorptionsmaterial ist auch unter der Bezeichnung "Radar Absorptive Material" (RAM) bekannt. Solche Materialien sind aus dem Stand der Technik bereits bekannt. Das eingesetzte Absorptionsmaterial kann beispielsweise ein wellenabsorbierender Kunststoff sein. Es kann z.B. ein schwarzes Kunststoffgranulat eingesetzt werden, wie es bereits zur Herstellung des oben genannten Absorptionsschirms verwendet wird. Dieses Kunststoffgranulat kann nun zermahlen und in Pulver verarbeitet bzw. verwandelt werden. Ein derartiges Pulver kann mit einem Zweikomponenten-Epoxidharz vermischt und verrührt und anschließend mit einer entsprechenden Dicke auf die Rückseite des Stoßfängers aufgetragen werden. Dieses Auftragen kann so aussehen, dass die Rückseite des Verkleidungsteils mit dem Absorptionsmaterial bestrichen oder besprüht wird. Ein solcher "Lackiervorgang" kann beispielsweise mit einer Schablone durchgeführt werden.

Anders als im Gegenstand gemäß Druckschrift US 6 496 138 B1 - dort beeinflusst das Absorptionsmaterial die Ausbreitung der ausgesendeten Wellen und somit die Richtcharakteristik des Radarsensors - wird bei der erfindungsgemäßen Anordnung vorgeschlagen, zur Absorption von Störwellen außerhalb des azimutalen Erfassungswinkels und somit zur Absorption der Sekundärstrahlung das Absorptionsmaterial außerhalb des Schnittbereiches des azimutalen Sichtfelds des Radarsensors mit dem Verkleidungsteil auf die Rückseite selbigen Verkleidungsteils aufzubringen. Somit wird die Ausbreitung der ausgesendeten Radarwellen durch das Absorptionsmaterial nicht beeinflusst.

In einer Ausführungsform ist vorgesehen, dass sich das Absorptionsmaterial in Azimutrichtung an einen Rand des Schnittbereiches und somit an den Schnittbereich unmittelbar anschließt. Somit ist das Absorptionsmaterial in Azimutrichtung unmittelbar neben dem Schnittbereich des Sichtfelds des Radarsensors mit dem Verkleidungsteil angeordnet. Auf diesem Wege gelingt es, die rückwärtige Störstrahlung besonders wirkungsvoll zu absorbieren, ohne dass diese Störwellen in das Sichtfeld des Radarsensors gelangen.

Bevorzugt ist das Absorptionsmaterial in Azimutrichtung auf beiden Seiten des Schnittbereiches auf die Rückseite des Verkleidungsteils aufgebracht. Somit können Störwellen sowohl auf der einen als auch auf der anderen Seite des Radarsensors absorbiert werden.

Neben dem Sichtfeld in Azimutrichtung weist der Radarsensor bevorzugt auch eine Strahlausweitung in Elevationsrichtung auf. Diese kann beispielsweise von -15° bis +15° bezüglich der Horizontalen betragen. Durch den Elevationswinkel wird ein Sichtfeld des Radarsensors in Elevationsrichtung definiert, welches den Schnittbereich in Elevationsrichtung begrenzt. Bei dieser Ausführungsform kann auch in Elevationsrichtung ein Absorptionsmaterial außerhalb des Schnittbereiches auf die Rückseite des Verkleidungsteils aufgebracht sein, um die Streustrahlung in Elevationsrichtung zu unterdrücken. Somit ist das Sichtfeld des Radarsensors nicht nur in Azimutrichtung, sondern auch in Elevationsrichtung vor den Störwellen geschützt. Auch hier ist insbesondere vorgesehen, dass in Elevationsrichtung das Absorptionsmaterial auf beiden Seiten des Schnittbereiches (sowohl unterhalb als auch oberhalb) auf die Rückseite des Verkleidungsteils aufgebracht ist.

Insgesamt kann das Absorptionsmaterial eine um den Schnittbereich herum geschlossene Fläche bilden. Dies bedeutet, dass die Rückseite des Verkleidungsteils um den Radarsensor herum und somit umlaufend mit dem Absorptionsmaterial versehen ist, während vor dem Radarsensor ein von dem Absorptionsmaterial freies "Strahlungsfenster" ausgebildet ist, dessen Größe der Größe des Schnittbereiches des gesamten Sichtfelds des Radarsensors mit dem Verkleidungsteil entspricht. Somit ist einerseits eine gute Transmission der ausgesendeten Wellen durch das Verkleidungsteil hindurch gewährleistet; andererseits können somit die rückwärtigen Störwellen um den Radarsensor herum zuverlässig absorbiert und das Sichtfeld des Radarsensors somit vor den Störwellen geschützt werden.

Abhängig von der Geometrie des Verkleidungsteils sowie von dem Abstand zwischen dem Radarsensor und der Rückseite des Verkleidungsteils entsteht folglich eine Kontur des Schnittbereiches, innerhalb derer die Radarwellen durch das Verkleidungsteil hindurch ausgesendet und empfangen werden. Die durch diese Kontur gebildete Fläche ist frei von dem Absorptionsmaterial bzw. das Absorptionsmaterial befindet sich außerhalb dieser Kontur und bevorzugt unmittelbar anschließend. Diese Kontur des gesamten Schnittbereiches kann beispielsweise mit Hilfe eines CAD-Programms individuell für unterschiedliche Fahrzeugkonfigurationen berechnet werden.

Die Ausdehnung bzw. die Breite des Absorptionsmaterials in Azimutrichtung ausgehend von dem Schnittbereich ist vorzugsweise größer als 2 cm, insbesondere größer als 3 cm, noch bevorzugter größer als 5 cm. Diese Ausdehnung kann auf der linken und auf der rechten Seite des Sensorgehäuses gleich sein. Mit einer solchen Breite des Absorptionsmaterials in Azimutrichtung ergibt sich eine ausreichende Absorption der Störwellen.

Ausgehend von dem Schnittbereich kann die Ausdehnung des Absorptionsmaterials in Elevationsrichtung kleiner als die Ausdehnung in Azimutrichtung sein. Die Ausdehnung in Elevationsrichtung kann beispielsweise 1 cm oder 2 cm oder 3 cm oder 4 cm betragen.

Wie bereits ausgeführt ist das Sensorgehäuse mit seinem Radom in einem Abstand zur Rückseite des Verkleidungsteils angeordnet. Es hat sich als vorteilhaft erwiesen, wenn dieser Abstand zwischen dem Radom und der Rückseite des Verkleidungsteils größer als λ/2 ist, wobei λ die Wellenlänge der elektromagnetischen Wellen bezeichnet. Es hat sich herausgestellt, dass ein solcher Abstand von mindestens λ/2 - also beispielsweise von mindestens 0,5 cm bis 0,8 cm - dafür sorgt, dass das dielektrische Material des Verkleidungsteils den Aufbau einer kollimierten elektromagnetischen Welle nicht stört. Dies beruht darauf, dass direkt an der Sendeantenne der elektrische Feldvektor gleich Null ist und im Nahfeld von 1 bis 2 Wellenlängen die Feldenergie der elektromagnetischen Wellen hauptsächlich im Magnetfeld (H-Feld) enthalten ist. Erst im Fernfeld von 5 bis 10 Wellenlängen hat sich die Feldenergie gleichmäßig auf das elektrische Feld (E-Feld) und das H-Feld verteilt. Wird der oben angegebene minimale Abstand unterschritten, so stört das dielektrische Material des Verkleidungsteils den Aufbau des E-Felds und somit einer kollimierten Welle.

Durch die Anordnung des Radarsensors in einem Abstand zur Rückseite des Verkleidungsteils wird zwischen dem Radom einerseits und dem Verkleidungsteil andererseits ein Luftspalt ausgebildet. Dieser Luftspalt ist insbesondere frei von jeglichen Elementen und Absorptionsmaterialien, welche die Ausbreitung der elektromagnetischen Wellen stören könnten.

Vorzugsweise liegt der azimutale Erfassungswinkel des Radarsensors in einem Wertebereich von 140° bis 170° und beträgt bevorzugt 150°. Die Erfindung ist jedoch nicht auf einen solchen Radarsensor mit einem solchermaßen breiten azimutalen Erfassungswinkel beschränkt.

Ist das Sensorgehäuse in einem Abstand zur Rückseite des Verkleidungsteils angeordnet und liegt das Absorptionsmaterial außerhalb des Schnittbereiches des Sichtfelds des Radarsensors mit dem Verkleidungsteil, so liegt auch das Radom des Radarsensors in einem Abstand zum Absorptionsmaterial, so dass auch ein Luftspalt zwischen dem Absorptionsmaterial einerseits und dem Randbereich des Radoms andererseits ausgebildet ist. Um diesen Abstand zu überbrücken und das Eindringen streifender Störwellen in das Sichtfeld des Radarsensors auf ein Minimum zu reduzieren, kann die Anordnung weiterhin ein Absorptionselement zur Absorption der Störwellen aufweisen, welches einerseits an einem Randbereich des Radoms und/oder an einer Seitenwand des Radargehäuses und andererseits an dem Absorptionsmaterial anliegt.

Das Absorptionselement weist die Form einer umlaufenden Manschette auf:
Es ist als umlaufender, bevorzugt trichterförmiger Kragen - insbesondere in Form einer Halskrause oder dergleichen - ausgebildet, dessen erstes Ende das Radom außenumfänglich umgreift bzw. umschließt und dessen zweites Ende an dem Absorptionsmaterial anliegt und somit vorzugsweise den Schnittbereich des Sichtfelds des Radarsensors mit dem Verkleidungsteil außenumfänglich umgibt. Durch eine solche Ausgestaltung des Absorptionselements wird einerseits das gesamte Sichtfeld des Radarsensors gegen extrem flach bzw. quasi parallel zum Verkleidungsteil eindringende Sekundärstrahlung geschützt, die aus dem Bereich hinter dem Radarsensor stammt, an dem Verkleidungsteil reflektiert wird und von dort streifend auf die Frontfläche des Radoms weitergeleitet wird. Andererseits hat ein solches Absorptionselement zusätzlich auch den Vorteil, dass Vibrationen des Sensorgehäuses im Betrieb des Kraftfahrzeugs - etwa im Frequenzbereich von 50 bis 200 Hz - gedämpft werden können. Das Absorptionselement übernimmt also insgesamt zwei verschiedene Funktionen, nämlich einerseits die Funktion der Absorption der elektromagnetischen Sekundärstrahlung sowie andererseits die Funktion der Dämpfung von Vibrationen, die auf das Sensorgehäuse einwirken.

Das Absorptionselement kann beispielsweise am Gehäuse des Radarsensors - im Randbereich des Radoms - angeklebt oder angeschweißt werden. Auch auf den Seiten des Verkleidungsteils bzw. des Absorptionsmaterials ist eine Verklebung oder aber ein Verschweißen möglich.

Das Absorptionselement ist bevorzugt aus einem elastischen Material gebildet, nämlich insbesondere aus Schaumstoff. Dieses Material kann an der äußeren Fläche mit einem Absorptionsmaterial (RAM) beschichtet sein, etwa mit dem gleichen Absorptionsmaterial, welches auf die Rückseite des Verkleidungsteils aufgebracht wird. Die Ausgestaltung des Absorptionselements aus einem elastischen Material ermöglicht es, den Radarsensor derart hinter dem Verkleidungsteil anzuordnen, dass es einen leichten Druck gegen das Absorptionselement ausübt. Somit sind die Vibrationen des Sensorgehäuses durch den Dämpfungseffekt des elastischen Materials deutlich reduziert.

Das Absorptionselement stellt also vorzugsweise eine umlaufende elastische und insbesondere auch dünne Dichtung dar, welche um das Radom des Sensorgehäuses herum außenumfänglich angeordnet ist und mit der Rückseite des Verkleidungsteils einerseits sowie mit dem Randbereich des Radoms andererseits dichtend zusammenwirkt.

Als Radarsensor kann beispielsweise ein Dauerstrichradar verwendet werden, welcher zum Abstrahlen einer in ihrer Frequenz modulierten kontinuierlichen elektromagnetischen Welle ausgebildet ist (auch unter der Bezeichnung FMCW-Radar bzw. "Frequency Modulated Continuous Wave Radar" bekannt). Mit einem solchen Radarsensor gelingt es, die Entfernung des Zielobjekts sowie die relative Geschwindigkeit des Zielobjektes bezüglich des Kraftfahrzeugs und den Zielwinkel zu bestimmen. Ein Empfänger des Radarsensors kann mindestens zwei Empfangspfade aufweisen, welche jeweils einen Abwärtsmischer, einen Verstärker und einen Analog-Digital-Wandler umfassen können. Die Erfindung ist jedoch nicht auf einen solchen Radarsensor beschränkt.

Bei dem Radarsensor kann auch eine separate Sendeantenne - sei diese eine einzelne Sendeantenne oder eine Sendeantennengruppe - verwendet werden, die mit Hilfe eines lokalen Oszillators zur Erzeugung eines Sendesignals gespeist wird. Die Sendeantenne kann elektronisch phasengesteuert werden, um so insgesamt einen relativ breiten Erfassungswinkel in Azimutrichtung mit einer relativ schmalen Hauptkeule der Richtcharakteristik in Azimutrichtung erfassen zu können.

Es sind unterschiedlichste Anwendungen des Radarsensors in dem Kraftfahrzeug sinnvoll möglich: Z.B. kann der Radarsensor zur Spurwechselassistenz, zur Überwachung des toten Winkels, wie auch zur Unfallfrüherkennung dienen. Die erfindungsgemäße Anordnung kann aber auch die Funktion einer automatischen Abstandswarnung, einer Abstandsregelung, einer Spurverlassens-Warnung und/oder einer Einparkhilfe haben. Der Radarsensor kann also Bestandteil eines Totwinkelerkennungssystems (Blind Spot Warning) und/oder eines Spurwechselassistenten (Lane Change Assist) und/oder einer Rückwärtsausparkhilfe (Cross Traffic Alert) und/oder eines Türöffnerassistenten (Door Opening Assist) und/oder eines Auffahrerkennungssystems (Rear Pre-Crash) sein.

Die Erfindung betrifft auch ein Kraftfahrzeug mit einer erfindungsgemäßen Anordnung.

Ein erfindungsgemäßes Verfahren dient zum Herstellen einer Anordnung für ein Kraftfahrzeug durch Bereitstellen eines Verkleidungsteils, insbesondere eines Stoßfängers, sowie Bereitstellen eines Radarsensors, welcher zur Detektion eines Zielobjektes elektromagnetische Wellen durch das Verkleidungsteil hindurch aussendet und die an dem Zielobjekt reflektierten Wellen als Strahlungsechos empfängt, wobei der Radarsensor einen azimutalen Erfassungswinkel aufweist, durch welchen ein Sichtfeld des Radarsensors in Azimutrichtung definiert wird, und wobei der Radarsensor in einem Abstand zu einer Rückseite des Verkleidungsteils angeordnet wird, so dass das azimutale Sichtfeld des Radarsensors das Verkleidungsteil in einem Schnittbereich schneidet. Zur Absorption von Störwellen außerhalb des azimutalen Erfassungswinkels wird ein Absorptionsmaterial in Azimutrichtung außerhalb des Schnittbereiches auf die Rückseite des Verkleidungsteils aufgebracht, und der Schnittbereich wird frei vom Absorptionsmaterial ausgebildet.

Die mit Bezug auf die erfindungsgemäße Anordnung vorgestellten bevorzugten Ausführungsformen und deren Vorteile gelten entsprechend für das erfindungsgemäße Kraftfahrzeug sowie für das erfindungsgemäße Verfahren.

Weitere Merkmale der Erfindung ergeben sich aus den Ansprüchen, den Figuren und der Figurenbeschreibung. Alle vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder aber in Alleinstellung verwendbar.

Die Erfindung wird nun anhand eines bevorzugten Ausführungsbeispiels, wie auch unter Bezugnahme auf die beigefügten Zeichnungen näher erläutert. Es sei betont, dass das nachfolgend beschriebene Ausführungsbeispiel eine bevorzugte Ausführungsform der Erfindung darstellt und die Erfindung somit nicht auf die beispielhafte Ausführungsform beschränkt ist.

Es zeigen:
- Fig. 1: eine Phasencharakteristik eines Radarsensors im nicht-verbauten Zustand;
- Fig. 2: eine Phasencharakteristik des Radarsensors im verbauten Zustand;
- Fig. 3: in schematischer Darstellung ein Kraftfahrzeug mit einer Anordnung gemäß einer Ausführungsform der Erfindung; und
- Fig. 4: in schematischer Darstellung eine Schnittansicht durch eine Anordnung gemäß einer Ausführungsform der Erfindung.

In den Figuren werden gleiche oder funktionsgleiche Elemente mit den gleichen Bezugszeichen versehen.

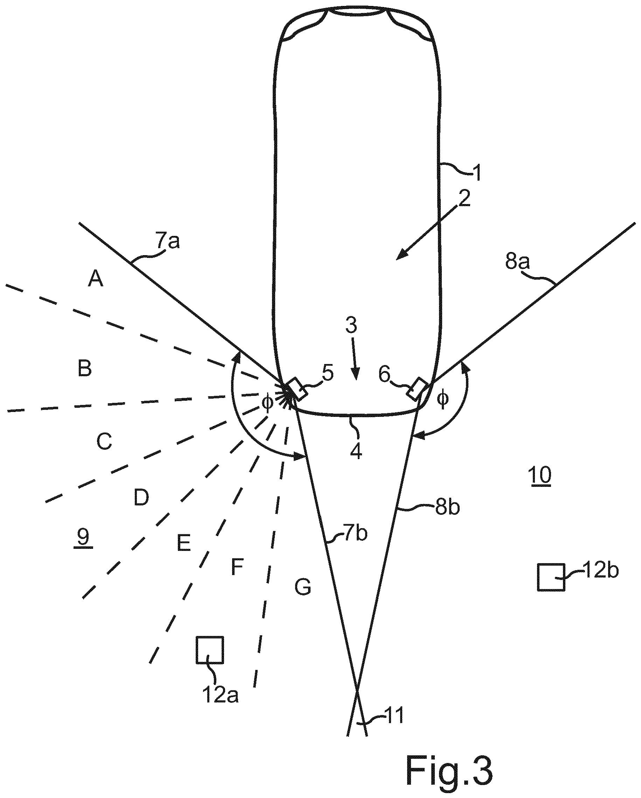

Ein in Fig. 3 dargestelltes Kraftfahrzeug 1 ist beispielsweise ein Personenkraftwagen. Das Kraftfahrzeug 1 umfasst ein Fahrerassistenzsystem 2, welches den Fahrer beim Führen des Kraftfahrzeugs 1 unterstützt.

Zum Fahrerassistenzsystem 2 gehört eine Anordnung 3 aus einem hinteren Stoßfänger 4 des Kraftfahrzeugs 1 und zwei Radarsensoren, nämlich einem ersten Radarsensor 5 und einem zweiten Radarsensor 6. Der Stoßfänger 4 ist ein Verkleidungsteil des Kraftfahrzeugs 1.

Der erste Radarsensor 5 ist in einem linken hinteren Eckbereich des Kraftfahrzeugs 1 angeordnet, während der zweite Radarsensor 6 in einem rechten hinteren Eckbereich angeordnet ist. Beide Radarsensoren 5, 6 befinden sich hinter dem Stoßfänger 4 und sind somit von außerhalb des Kraftfahrzeugs 1 nicht sichtbar. Die Radarsensoren 5, 6 sind mit anderen Worten hinter dem Stoßfänger 4 versteckt bzw. verdeckt angeordnet.

Die Radarsensoren 5, 6 sind beispielsweise Frequenzmodulations-Dauerstrich-Radarsensoren (Frequency Modulated Continuous Wave Radar).

Die Radarsensoren 5, 6 besitzen jeweils einen azimutalen Erfassungswinkel Φ, welcher in Fig. 3 durch zwei Linien 7a, 7b (für den linken Radarsensor 5) bzw. 8a, 8b (für den rechten Radarsensor 6) begrenzt ist. Der azimutale Erfassungswinkel Φ beträgt beispielsweise 150°. Durch den azimutalen Erfassungswinkel Φ ist jeweils ein Sichtfeld 9 bzw. 10 des jeweiligen Radarsensors 5, 6 in Azimutrichtung und somit in horizontaler Richtung definiert. Die Sichtfelder 9, 10 können sich auch gegenseitig überlappen, so dass ein Überlappungsbereich 11 gegeben ist.

In ihren jeweiligen Sichtfeldern 9, 10 können die Radarsensoren 5, 6 (fahrzeugexterne) Zielobjekte 12a (links) und 12b (rechts) detektieren. Insbesondere können die Radarsensoren 5, 6 die Entfernung der Zielobjekte 12a bzw. 12b von dem jeweiligen Radarsensor 5, 6, wie auch jeweils den Zielwinkel sowie die Relativgeschwindigkeit der Zielobjekte 12a bzw. 12b bezüglich des Kraftfahrzeugs 1 bestimmen - dies sind Messgrößen der Radarsensoren 5, 6. Der Zielwinkel wird mittels einer Phasenkurve bestimmt, wie sie beispielsweise in Fig. 1 dargestellt ist.

Bezug nehmend weiterhin auf Fig. 3 kann der Radarsensor 5 - und analog auch der Radarsensor 6 - verschiedene Teilbereiche A, B, C, D, E, F, G des azimutalen Sichtfeldes 9 nacheinander bestrahlen. Diese Teilbereiche A bis G stellen Winkelbereiche dar, wobei zur Erfassung der Teilbereiche A bis G nacheinander beispielsweise eine Sendekeule einer Sendeantenne des Radarsensors 5 elektronisch in Azimutrichtung geschwenkt wird, nämlich nach dem Phase-Array-Prinzip. Die beiden genannten Empfangsantennen können in diesem Falle in Azimutrichtung eine breite Empfangscharakteristik aufweisen, mit welcher das gesamte azimutale Sichtfeld φ abgedeckt wird. Andere Ausgestaltungen können alternativ schmale Empfangswinkelbereiche in Verbindung mit breiten Sendekeulen realisieren.

In Fig. 3 sind der Übersicht halber lediglich die Teilbereiche A bis G des Sichtfeldes 9 des ersten Radarsensors 5 dargestellt. Entsprechend ist hier jedoch auch das horizontale Sichtfeld 10 des zweiten Radarsensors 6 in mehrere Teilbereiche unterteilt. Wenngleich sich die weitere Beschreibung auf den ersten Radarsensor 5 bezieht, entsprechen Funktionsweise und Anordnung dem zweiten Radarsensor 6.

Die Anzahl der Teilbereiche A bis G ist in Fig. 3 lediglich beispielhaft dargestellt und kann je nach Ausführungsform unterschiedlich sein. Im Ausführungsbeispiel sind insgesamt sieben Teilbereiche A bis G vorgesehen, welche einer nach dem anderen durch den Radarsensor 5 beleuchtet werden.

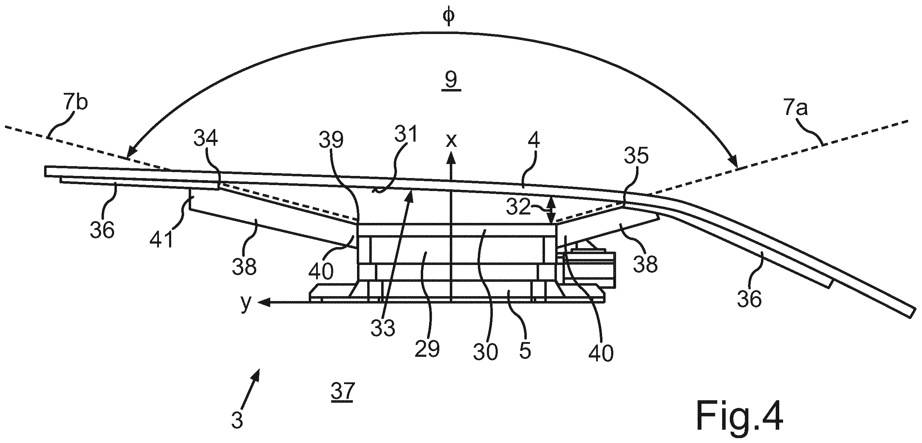

Fig. 4 zeigt nun in schematischer Darstellung eine Schnittansicht durch eine Anordnung 3 aus dem Radarsensor 5 und dem Stoßfänger 4 entlang einer horizontalen Ebene. Der azimutale Erfassungswinkel Φ ist durch die Linien 7a, 7b begrenzt. Der Radarsensor 5 hat ein Gehäuse 29, in welchem alle Komponenten des Radarsensors 5 untergebracht sind. Frontseitig und somit auf der dem Stoßfänger 4 zugewandten Frontseite ist das Gehäuse 29 mit einem Radom 30 abgedeckt, welches ein Schutzelement für die Sende- und Empfangsantennen des Radarsensors 5 darstellt. Durch das Radom 30 hindurch werden die elektromagnetischen Wellen ausgesendet und empfangen. Das Radom 30 ist dabei einer Rückseite 31 des Stoßfängers 4 zugewandt, welche dem Innenraum des Kraftfahrzeugs zugewandt ist. Das Radom 30 liegt in einem Abstand 32 zur Rückseite 31, wobei mit 32 der minimale Abstand zwischen dem Radarsensor 5 und dem Stoßfänger 4 bezeichnet ist.

Im Radarsensor 5 wird ein lokales Koordinatensystem x, y definiert. Die Radarachse x verläuft senkrecht zur Frontfläche des Radoms 30, während die y-Achse parallel zum Radom 30 und somit senkrecht zur Radarachse x verläuft. Die Hochrichtung des Radarsensors 5 ist in Fig. 4 nicht dargestellt.

Ein Winkel zwischen der Achse y und der Fahrzeuglängsachse bezeichnet einen Einbauwinkel des Radarsensors 5 in Azimutrichtung. Dieser Einbauwinkel kann beispielsweise in einem Wertebereich von 30° bis 45° liegen. Dieser Einbauwinkel kann in einer Ausführungsform 37° betragen.

Wie bereits ausgeführt, beträgt der azimutale Erfassungswinkel Φ des Radarsensors 5 beispielsweise 150°. Demgegenüber kann der Erfassungswinkel in Elevationsrichtung insgesamt beispielsweise 30° betragen.

Das azimutale Sichtfeld 9 bzw. der azimutale Erfassungswinkel Φ des Radarsensors 5 schneiden den Stoßfänger 4 und damit die Rückseite 31 in einem Schnittbereich 33, welcher einen ellipsen-ähnlichen Flächenbereich an der Rückseite 31 des Stoßfängers 4 darstellt. In Azimutrichtung ist der Schnittbereich 33 einerseits durch einen Schnittpunkt 34 der Linie 7b mit der Rückseite 31 und andererseits durch einen Schnittpunkt 35 der Linie 7a mit der Rückseite 33 des Stoßfängers 4 begrenzt. In Elevationsrichtung ist dieser Schnittbereich 33 durch den Elevationswinkel des Radarsensors 5 begrenzt.

Der Schnittbereich 33 ist also derjenige Flächenbereich des Stoßfängers 4, durch welchen die elektromagnetischen Wellen hindurch ausgesendet und empfangen werden und welcher durch das gesamte Sichtfeld des Radarsensors 5 bestrahlt wird. Außerhalb des Schnittbereiches 33 ist auf die Rückseite 31 des Stoßfängers 4 ein Absorptionsmaterial 36 um den Schnittbereich 33 herum aufgebracht, um die von einem rückwärtigen Bereich 37 hinter dem Radarsensor 5 einfallenden Störwellen zu absorbieren. Das Absorptionsmaterial 36 bildet eine um den Schnittbereich 33 herum geschlossene Fläche und erstreckt sich ausgehend von dem Schnittbereich 33 sowohl in Azimutrichtung als auch in Elevationsrichtung jeweils auf den beiden Seiten des Radarsensors 5 nach außen hin. In Azimutrichtung beträgt die Ausdehnung bzw. die Breite des Absorptionsmaterials 36 auf beiden Seiten jeweils einige Zentimeter.

Der Schnittbereich 33 des Stoßfängers 4 mit dem Sichtfeld 9 alleine ist frei von dem genannten Absorptionsmaterial 36, so dass sich die elektromagnetischen Wellen ungestört durch das Material des Stoßfängers 4 hindurch ausbreiten können.

Das Absorptionsmaterial 36 ist ein RAM-Material (Radar Absorption Material). Als RAM-Material kann dabei ein Kunststoffgranulat eingesetzt werden, welches dann zermahlen und zum Pulver verarbeitet wird. Dieses Pulver kann mit einem Zweikomponenten-Epoxidharz verrührt und mit einer Dicke von beispielsweise λ/2 auf die Rückseite 31 des Stoßfängers 4 aufgetragen werden.

Das genannte Granulat kann auch in einer Flüssigkeit aufgelöst werden, um es für einen Aufsprühvorgang verwenden zu können.

Das Absorptionsmaterial 36 wird gleichmäßig und homogen auf die Rückseite 31 des Stoßfängers 4 aufgebracht. Das Absorptionsmaterial 36 befindet sich dann außerhalb des azimutalen Erfassungswinkels Φ und außerhalb des Elevationswinkels des Radarsensors 5 und folglich außerhalb des gesamten Sichtfelds des Radarsensors 5. Dabei schließt sich das Absorptionsmaterial 36 unmittelbar an den Schnittbereich 33 an, so dass der Abstand zwischen dem Absorptionsmaterial 36 und den Linien 7a bzw. 7b gleich Null ist.

Mit dem Absorptionsmaterial 36 wird das Sichtfeld 9 des Radarsensors 5 vor einer rückwärtigen Störstrahlung bzw. Sekundärstrahlung zuverlässig geschützt. Um zusätzlich noch die Empfangsantennen gegen eine sehr flach eindringende Sekundärstrahlung schützen zu können, die aus dem rückwärtigen Bereich 37 stammt, gegen den Stoßfänger 4 reflektiert wird und von dort streifend auf die Frontfläche des Radoms weitergeleitet wird, wird ein Absorptionselement 38 in Form einer RAM-Strahlungsmanschette eingesetzt, welches aus einem flexiblen Kunststoffmaterial ausgebildet ist. Das Absorptionselement 38 ist mit einem Strahlung absorbierenden Material beschichtet. Es ist in Form einer umlaufenden Manschette bzw. eines umlaufenden, trichterförmigen Kragens ausgeführt, welcher einerseits an einem Randbereich 39 des Radoms 30 und andererseits an dem Absorptionsmaterial 36 - im Randbereich des Schnittbereiches 33, jedoch außerhalb des Schnittbereiches 33 - anliegt. Ein erstes Ende 40 des Absorptionselements 38 umgreift bzw. ummantelt das Radom 30 außenumfänglich und ist mit der Seitenwand des Gehäuses 29 verbunden, etwa verklebt oder verschweißt. Eine solche Klebeverbindung oder aber Schweißverbindung kann auch auf der Seite des Absorptionsmaterials 36 bereitgestellt sein. Mit seinem zweiten Ende 41 liegt das Absorptionselement 38 also an dem Absorptionsmaterial 36 an. Somit stellt das Absorptionselement 38 quasi eine umlaufende Dichtung dar, mittels welcher das Sichtfeld des Radarsensors 5 vollständig gegen die rückwärtige Störstrahlung abgeschirmt ist.

Das Absorptionselement 38 hat außerdem die Funktion der Dämpfung von Vibrationen des Radarsensors 5. Um diese Dämpfung zu unterstützen, kann der Radarsensor 5 - beispielsweise an einem Fahrgestell des Kraftfahrzeugs 1 - derart montiert werden, dass er einen leichten Druck gegen das Absorptionselement 38 ausübt und das Absorptionselement 38 somit zwischen dem Radarsensor 5 einerseits und dem Absorptionsmaterial 36 andererseits unter Federkraft eingeklemmt wird. Somit schließt das Absorptionselement 38 vibrationsfest und betriebssicher mit der Rückseite 31 des Stoßfängers 4 ab.

## Patentansprüche

1. Anordnung (3) für ein Kraftfahrzeug (1), mit einem Verkleidungsteil (4), insbesondere einem Stoßfänger, und mit einem Radarsensor (5, 6), welcher dazu ausgebildet ist, zur Detektion von Zielobjekten (12a, 12b) elektromagnetische Wellen durch das Verkleidungsteil (4) hindurch auszusenden und Strahlungsechos von den Zielobjekten (12a, 12b) zu empfangen, wobei der Radarsensor (5, 6) einen azimutalen Erfassungswinkel (φ) aufweist, durch welchen ein Sichtfeld (9, 10) des Radarsensors (5, 6) in Azimutrichtung definiert ist, und wobei der Radarsensor (5, 6) in einem Abstand (32) zu einer Rückseite (31) des Verkleidungsteils (4) angeordnet ist, so dass das azimutale Sichtfeld (9, 10) des Radarsensors (5, 6) das Verkleidungsteil (4) in einem Schnittbereich (33) schneidet,
wobei zur Absorption von Störwellen außerhalb des azimutalen Erfassungswinkels (φ) ein Absorptionsmaterial (36) in Azimutrichtung außerhalb des Schnittbereichs (33) auf die Rückseite (31) des Verkleidungsteils (4) aufgebracht ist und der Schnittbereich (33) frei vom Absorptionsmaterial (36) ist, **dadurch gekennzeichnet, dass** die Anordnung (3) weiterhin ein Absorptionselement (38) zur Absorption der Störwellen aufweist, welches einerseits an einem Randbereich (39) eines Radoms (30) des Radarsensors (5, 6) und andererseits an dem Absorptionsmaterial (36) anliegt, und dass das Absorptionselement (38) als umlaufender Kragen ausgebildet ist, dessen erstes Ende (40) das Radom (30) außenumfänglich umgreift und dessen zweites Ende (41) an dem Absorptionsmaterial (36) anliegt.

2. Anordnung (3) nach Anspruch 1,
**dadurch gekennzeichnet, dass**
sich das Absorptionsmaterial (36) in Azimutrichtung an einen Rand des Schnittbereichs (33) unmittelbar anschließt.

3. Anordnung (3) nach Anspruch 1 oder 2,
**dadurch gekennzeichnet, dass**
in Azimutrichtung das Absorptionsmaterial (36) auf beiden Seiten des Schnittbereichs (33) auf die Rückseite (31) des Verkleidungsteils (4) aufgebracht ist.

4. Anordnung (3) nach einem der vorhergehenden Ansprüche,
**dadurch gekennzeichnet, dass**
auch in Elevationsrichtung der Radarsensor (5, 6) einen vorbestimmten Erfassungswinkel aufweist, durch welchen ein Sichtfeld des Radarsensors (5, 6) in Elevationsrichtung definiert ist, welches den Schnittbereich (33) in Elevationsrichtung begrenzt, wobei auch in Elevationsrichtung das Absorptionsmaterial (36) außerhalb des Schnittbereichs (33) auf die Rückseite (31) des Verkleidungsteils (4) aufgebracht ist.

5. Anordnung (3) nach einem der vorhergehenden Ansprüche,
**dadurch gekennzeichnet, dass**
das Absorptionsmaterial (36) eine um den Schnittbereich (33) herum geschlossene Fläche bildet.

6. Anordnung (3) nach einem der vorhergehenden Ansprüche,
**dadurch gekennzeichnet, dass**
eine Ausdehnung des Absorptionsmaterials (36) in Azimutrichtung ausgehend von dem Schnittbereich (33) größer als 2 cm, insbesondere größer als 3 cm, noch bevorzugter größer als 5 cm, ist.

7. Anordnung (3) nach einem der vorhergehenden Ansprüche,
**dadurch gekennzeichnet, dass**
der Abstand (32) zwischen dem Radarsensor (5, 6) und der Rückseite (31) des Verkleidungsteils (4) größer als λ/2 ist, wobei λ eine Wellenlänge der elektromagnetischen Wellen bezeichnet.

8. Anordnung (3) nach einem der vorhergehenden Ansprüche,
**dadurch gekennzeichnet, dass**
der azimutale Erfassungswinkel (φ) in einem Wertebereich von 140°bis 170°liegt, insbesondere 150°beträgt.

9. Anordnung (3) nach Anspruch 1,
**dadurch gekennzeichnet, dass**
das Absorptionselement (38) aus einem elastischen Material, insbesondere aus Schaumstoff, gebildet ist.

10. Kraftfahrzeug (1) mit einer Anordnung (3) nach einem der vorhergehenden Ansprüche.

11. Verfahren zum Herstellen einer Anordnung (3) für ein Kraftfahrzeug (1) durch Bereitstellen eines Verkleidungsteils (4), insbesondere eines Stoßfängers, sowie Bereitstellen eines Radarsensors (5, 6), welcher zur Detektion von Zielobjekten (12a, 12b) elektromagnetische Wellen durch das Verkleidungsteil (4) hindurch aussendet und Strahlungsechos von den Zielobjekten (12) empfängt, wobei der Radarsensor (5, 6) einen azimutalen Erfassungswinkel (φ) aufweist, durch welchen ein Sichtfeld (9, 10) des Radarsensors (5, 6) in Azimutrichtung definiert ist, und wobei der Radarsensor (5, 6) in einem Abstand (32) zu einer Rückseite (31) des Verkleidungsteils (4) angeordnet wird, sodass das azimutale Sichtfeld (9, 10) des Radarsensors (5, 6) das Verkleidungsteil (4) in einem Schnittbereich (33) schneidet, wobei zur Absorption von Störwellen außerhalb des azimutalen Erfassungswinkels (φ) ein Absorptionsmaterial (36) in Azimutrichtung außerhalb des Schnittbereichs (33) auf die Rückseite (31) des Verkleidungsteils (4) aufgebracht wird und der Schnittbereich (33) frei vom Absorptionsmaterial (36) ausgebildet wird, **dadurch gekennzeichnet, dass** zur Absorption der Störwellen ein Absoprtionselement (38) eingesetzt wird, welches einerseits an einem Randbereich (39) eines Radoms (30) des Radarsensors (5, 6) und andererseits an dem Absorptionsmaterial (36) anliegt, und dass das Absorptionselement (38) als umlaufender Kragen ausgebildet ist, dessen erstes Ende (40) das Radom (30) außenumfänglich umgreift und dessen zweites Ende (41) an dem Absorptionsmaterial (36) anliegt.

## Claims

1. Arrangement (3) for a motor vehicle (1), having a trim component (4), in particular a bumper, and having a radar sensor (5, 6), which, in order to detect target objects (12a, 12b), is designed to emit electromagnetic waves through the trim component (4) and to receive radiation echoes from the target objects (12a, 12b), wherein the radar sensor (5, 6) has an azimuthal detection angle ( ), by which a field of vision (9, 10) of the radar sensor (5, 6) in the azimuthal direction is defined, and wherein the radar sensor (5, 6) is arranged at a distance (32) from a rear side (31) of the trim component (4), with the result that the azimuthal field of vision (9, 10) of the radar sensor (5, 6) intersects the trim component (4) in an intersection region (33), wherein in order to absorb interference waves outside the azimuthal detection angle ( ) an absorptive material (36) is applied outside the intersection region (33) in the azimuthal direction to the rear side (31) of the trim component (4), and the intersection region (33) is free of absorptive material (36), **characterized in that** the arrangement (3) also has an absorptive element (38) for absorbing the interference waves, which absorptive element (38) bears, on the one hand, on an edge region (39) of a raydome (30) of the radar sensor (5, 6) and, on the other hand, on the absorptive material (36), and **in that** the absorptive element (38) is embodied as a circumferential collar whose first end (40) engages around the raydome (30) on the outer circumference and whose second end (41) bears on the absorptive material (36).

2. Arrangement (3) according to Claim 1,
**characterized in that**
the absorptive material (36) directly adjoins an edge of the intersection region (33) in the azimuthal direction.

3. Arrangement (3) according to Claim 1 or 2,
**characterized in that**
in the azimuthal direction the absorptive material (36) is applied to both sides of the intersection region (33), to the rear side (31) of the trim component (4).

4. Arrangement (3) according to one of the preceding claims,
**characterized in that**
the radar sensor (5, 6) also has a predetermined detection angle in the elevation direction, by means of which detection angle a field of vision of the radar sensor (5, 6) in the elevation direction is defined, which field of vision bounds the intersection region (33) in the elevation direction, wherein the absorptive material (36) is also applied outside the intersection region (33) in the elevation direction to the rear side (31) of the trim component (4).

5. Arrangement (3) according to one of the preceding claims,
**characterized in that**
the absorptive material (36) forms a surface which is enclosed around the intersection region (33).

6. Arrangement (3) according to one of the preceding claims,
**characterized in that**
an extent of the absorptive material (36) in the azimuthal direction starting from the intersection region (33) is greater than 2 cm, in particular greater than 3 cm and more preferably greater than 5 cm.

7. Arrangement (3) according to one of the preceding claims,
**characterized in that**
the distance (32) between the radar sensor (5, 6) and the rear side (31) of the trim component (4) is greater than /2, wherein denotes a wavelength of the electromagnetic waves.

8. Arrangement (3) according to one of the preceding claims,
**characterized in that**
the azimuthal detection angle ( ) is in a value range from 140° to 170° and is in particular 150°.

9. Arrangement (3) according to Claim 1,
**characterized in that**
the absorptive element (38) is formed from an elastic material, in particular from foamed material.

10. Motor vehicle (1) having an arrangement (3) according to one of the preceding claims.

11. Method for manufacturing an arrangement (3) for a motor vehicle (1) by making available a trim component (4), in particular a bumper, and making available a radar sensor (5, 6), which, in order to detect target objects (12a, 12b), emits electromagnetic waves through the trim component (4) and receives radiation echoes from the target objects (12), wherein the radar sensor (5, 6) has an azimuthal detection angle ( ), by which a field of vision (9, 10) of the radar sensor (5, 6) in the azimuthal direction is defined, and wherein the radar sensor (5, 6) is arranged at a distance (32) from a rear side (31) of the trim component (4), with the result that the azimuthal field of vision (9, 10) of the radar sensor (5, 6) intersects the trim component (4) in an intersection region (33), wherein in order to absorb interference waves outside the azimuthal detection angle ( ) an absorptive material (36) is applied outside the intersection region (33) in the azimuthal direction to the rear side (31) of the trim component (4), and the intersection region (33) is free of absorptive material (36), **characterized in that** the arrangement (3) also has an absorptive element (38) for absorbing the interference waves, which absorptive element (38) bears, on the one hand, on an edge region (39) of a raydome (30) of the radar sensor (5, 6) and, on the other hand, on the absorptive material (36), and **in that** the absorptive element (38) is embodied as a circumferential collar whose first end (40) engages around the raydome (30) on the outer circumference and whose second end (41) bears on the absorptive material (36).

## Revendications

1. Agencement (3) destiné à un véhicule automobile (1), comprenant une pièce d'habillage (4), en particulier un pare-chocs, et un capteur radar (5, 6), qui est configuré, pour la détection d'objets cibles (12a, 12b), de façon à émettre des ondes électromagnétiques à travers la pièce d'habillage (4) et à recevoir des échos de rayonnement provenant des objets cibles (12a, 12b), dans lequel le capteur radar (5, 6) présente un angle de détection azimutal (φ), par lequel un champ de vision (9, 10) du capteur radar (5, 6) est défini en direction azimutale, et dans lequel le capteur radar (5, 6) est disposé à une distance (32) d'un côté arrière (31) de la pièce d'habillage (4), de telle manière que le champ de vision azimutal (9, 10) du capteur radar (5, 6) coupe la pièce d'habillage (4) dans une zone de coupe (33), dans lequel, pour l'absorption d'ondes parasites à l'extérieur de l'angle de détection azimutal (φ), un matériau d'absorption (36) est déposé en direction azimutale à l'extérieur de la zone de coupe (33) sur le côté arrière (31) de la pièce d'habillage (4) et la zone de coupe (31) est dépourvue de matériau d'absorption (36), **caractérisé en ce que** l'agencement (3) présente en outre un élément d'absorption (38) pour l'absorption des ondes parasites, qui est appliqué d'une part sur une région de bord (39) d'un radôme (30) du capteur radar (5, 6) et d'autre part sur le matériau d'absorption (36), et **en ce que** l'élément d'absorption (38) est constitué par un collet périphérique, dont la première extrémité (40) entoure en périphérie extérieure le radôme (30) et dont la seconde extrémité (41) est appliquée sur le matériau d'absorption (36) .

2. Agencement (3) selon la revendication 1, **caractérisé en ce que** le matériau d'absorption (36) se raccorde directement en direction azimutale à un bord de la zone de coupe (33).

3. Agencement (3) selon la revendication 1 ou 2, **caractérisé en ce que** le matériau d'absorption (36) est déposé en direction azimutale de part et d'autre de la zone de coupe (33) sur le côté arrière (31) de la pièce d'habillage (4).

4. Agencement (3) selon l'une quelconque des revendications précédentes, **caractérisé en ce que** le capteur radar (5, 6) présente également en direction d'élévation un angle de détection prédéterminé, par lequel un champ de vision du capteur radar (5, 6) est défini dans la direction d'élévation, qui limite la zone de coupe (33) en direction d'élévation, dans lequel le matériau d'absorption (36) est également déposé en direction d'élévation à l'extérieur de la zone de coupe (33) sur le côté arrière (31) de la pièce d'habillage (4) .

5. Agencement (3) selon l'une quelconque des revendications précédentes, **caractérisé en ce que** le matériau d'absorption (36) forme une surface fermée autour de la zone de coupe (33).

6. Agencement (3) selon l'une quelconque des revendications précédentes, **caractérisé en ce qu'**une extension du matériau d'absorption (36) en direction azimutale à partir de la zone de coupe (33) est supérieure à 2 cm, en particulier supérieure à 3 cm, et de préférence encore supérieure à 5 cm.

7. Agencement (3) selon l'une quelconque des revendications précédentes, **caractérisé en ce que** la distance (32) entre le capteur radar (5, 6) et le côté arrière (31) de la pièce d'habillage (4) est supérieure à λ/2, dans lequel λ est une longueur d'onde des ondes électromagnétiques.

8. Agencement (3) selon l'une quelconque des revendications précédentes, **caractérisé en ce que** l'angle de détection azimutal (φ) se situe dans une plage de valeurs de 140° à 170°, et vaut en particulier 150°.

9. Agencement (3) selon la revendication 1, **caractérisé en ce que** l'élément d'absorption (38) est formé en un matériau élastique, en particulier en mousse.

10. Véhicule automobile (1) comportant un agencement (3) selon l'une quelconque des revendications précédentes.

11. Procédé de fabrication d'un agencement (3) destiné à un véhicule automobile (1), comprenant la préparation d'une pièce d'habillage (4), en particulier d'un pare-chocs, ainsi que la préparation d'un capteur radar (5, 6) qui, pour la détection d'objets cibles (12a, 12b), émet des ondes électromagnétiques à travers la pièce d'habillage (4) et reçoit des échos de rayonnement provenant des objets cibles (12a, 12b), dans lequel le capteur radar (5, 6) présente un angle de détection azimutal (φ), par lequel un champ de vision (9, 10) du capteur radar (5, 6) est défini en direction azimutale, et dans lequel le capteur radar (5, 6) est disposé à une distance (32) d'un côté arrière (31) de la pièce d'habillage (4), de telle manière que le champ de vision azimutal (9, 10) du capteur radar (5, 6) coupe la pièce d'habillage (4) dans une zone de coupe (33), dans lequel, pour l'absorption d'ondes parasites à l'extérieur de l'angle de détection azimutal (φ), on dépose un matériau d'absorption (36) en direction azimutale à l'extérieur de la zone de coupe (33) sur le côté arrière (31) de la pièce d'habillage (4) et on réalise une zone de coupe (31) dépourvue de matériau d'absorption (36), **caractérisé en ce que**, pour l'absorption des ondes parasites, on utilise un élément d'absorption (38) qui est appliqué d'une part sur une région de bord (39) d'un radôme (30) du capteur radar (5, 6) et d'autre part sur le matériau d'absorption (36), et **en ce que** l'élément d'absorption (38) est constitué par un collet périphérique, dont la première extrémité (40) entoure en périphérie extérieure le radôme (30) et dont la seconde extrémité (41) est appliquée sur le matériau d'absorption (36).
